# EUROPÄISCHE PATENTSCHRIFT

(11) **EP 0 847 825 B1**
(45) Veröffentlichungstag und Bekanntmachung des Hinweises auf die Patenterteilung: **12.09.2001**
(21) Anmeldenummer: 97119572.2
(22) Anmeldetag: 08.11.1997
(51) Int. Cl.: B23K 9/32

(54) **Vorrichtung zur Gasbeflutung von zwei miteinander zu verschweissenden Rohren**
Device for gas flooding of two pipes being welded together
Dispositif pour le remplissage en gaz de deux tubes pour leur soudage bout à bout

(30) Priorität: 13.12.1996 DE 19651869
(43) Veröffentlichungstag der Anmeldung: 17.06.1998
(73) Patentinhaber: Jankus, Werner, D-58313 Herdecke (DE)
(72) Erfinder: Jankus, Werner, D-58313 Herdecke (DE)
(74) Vertreter: Niemann, Uwe, Dr.-Ing.

(56) Entgegenhaltungen:
- DE-A- 3 300 382
- DE-U- 8 807 145
- DE-U- 9 107 465

## Beschreibung

Die Erfindung betrifft eine Vorrichtung zur Gasbeflutung von zwei miteinander zu verschweißenden Rohren, - mit scheibenförmigen Dichtungen, die miteinander über einen rohrförmigen Träger aus Lochblech verbunden sind, in den eine Gaszuführung mündet.

Derartige Vorrichtungen werden bei der Herstellung von hochwertigen Rohrschweißverbindungen an niedrig- und hochlegierten Stählen eingesetzt. Sie bilden im Schweißnahtbereich mit den Enden der miteinander zu verschweißenden Rohre einen Beflutungsraum, dem ein Schutzgas zugeführt wird, welches das Verzundern der Schweißnaht und der daran anschließenden Übergangszonen verhindert. Die Strömung im Beflutungsraum soll im wesentlichen turbulenzfrei, d.h. laminar sein, um zu verhindern, daß durch den noch offenen Schweißnahtbereich Luft angesaugt wird.

Bei einer bekannten Vorrichtung der eingangs beschriebenen Gattung (DE-GM 88 07 145) besteht der rohrförmige Träger aus einem Lochblech, das auch mit einer Auflage aus Sintervlies versehen sein kann. Die Herstellung von Lochblechen mit hinreichend kleinen Löchern, die eine laminare Strömung im Beflutungsraum gewährleisten, ist problematisch. Problematisch ist auch die Bearbeitung und Montage derartiger Lochbleche. Das gilt auch für das Aufbringen eines Sintervlieses, wenn gewährleistet sein soll, daß die laminare Strömung im Beflutungsraum durch Befestigungsmittel nicht gestört werden soll. Bekannt ist es auch, den rohrförmigen Träger insgesamt aus einem Sintermetall herzustellen. Derartige Träger sind jedoch sehr teuer.

Aufgabe der Erfindung ist es, eine Vorrichtung der eingangs beschriebenen Gattung so zu verbessern, daß im Beflutungsraum laminare Strömung bei vertretbaren Herstellungskosten gewährleistet ist.

Diese Aufgabe wird dadurch gelöst, daß der rohrförmige Träger aus zwei Lochblechlagen und wenigstens einer dazwischen angeordneten Lage aus Drahtgewebe besteht. Vorzugsweise sollten die Lochbleche Löcher mit einem Durchmesser von 0,1 bis 2 mm, insbesondere 1 mm, aufweisen und das Drahtgewebe eine Maschenweite zwischen 20 und 150 µm, insbesondere von ca. 50 µm, aufweisen. Ein solcher Träger besitzt nicht nur die erforderliche Stabilität, sondern ermöglicht auch den Austritt von Schutzgas derart, daß im Beflutungsraum im wesentlichen laminare Strömungsverhältnisse herrschen. Dabei wird das nicht eigenstabile Drahtgewebe zwischen den beiden Lochblechen gehalten.

Eine bevorzugte Ausführung der Erfindung ist dadurch gekennzeichnet, daß die beiden Lochblechlagen aus einem Lochblechstreifen gewickelt sind, wobei das Drahtgewebe mit eingewickelt wird. Die Enden des Lochblechstreifens können mit der jeweils nächsten Lage des Wickels verschweißt sein.

Für besonders kritische Fälle kann der rohrförmige Träger mit einem hitzebeständigen Fasermaterial aus Metall, Keramik, Glas oder dergleichen gefüllt werden.

Im folgenden wird ein in der Zeichnung dargestelltes Ausführungsbeispiel der Erfindung erläutert; es zeigen:
- Figur 1: einen Axialschnitt durch eine Vorrichtung zur Gasbeflutung,
- Figur 2: teilweise einen Längsschnitt durch den Träger.

In der Zeichnung sind zwei Enden 1, 2 von zwei miteinander zu verschweißenden Rohrabschnitten dargestellt. Dazu ist in das Innere der beiden Enden 1, 2 eine Vorrichtung zur Gasbeflutung eingesetzt, die in ihrem grundsätzlichen Aufbau besteht aus zwei beidseits der Schweißnaht 3 angeordneten Stützscheiben 4, 5, die längs ihres Umfangs Dichtkränze 6, 7 aufweisen. Zwischen den beiden Stützscheiben 4, 5 ist ein rohrförmiger Träger 8 gehalten, zwischen dem und den Enden 1, 2 ein Beflutungsraum 9 gebildet ist.

Jeder Dichtkranz 6 bzw. 7 weist außen zwei mit gegenseitigem Abstand angeordnete und umlaufende Dichtlippen 10, 11 auf, deren Außendurchmesser größer ist als der Innendurchmesser der Enden 1 bzw. 2. Die Dichtkränze 6 bzw. 7 bestehen aus einem bis 400 °C temperaturbeständigen und auf eine Shore-Härte von 35 bis 70 eingestellten Silikonkautschuk oder Fluorkautschuk.

Die äußeren Ränder der Stützscheiben 4 bzw. 5 sind in die zugeordneten Dichtkränze 6 bzw. 7 eingegossen. Durchgangslöcher 12 in den Stützscheiben 4, 5 sorgen für eine hinreichend stabile Verankerung der Dichtkränze 6 bzw. 7 an ihren Stützscheiben 4 bzw. 5. Dementsprechend werden die äußeren Ränder der Stützscheiben 4 bzw. 5 von umlaufenden Befestigungsflanschen 13, 14 der Dichtkränze 6 bzw. 7 überfaßt.

Die inneren Befestigungsflansche 13 der Dichtkränze 6 bzw. 7 erstrecken sich radial nach innen bis in den Bereich des rohrförmigen Trägers 8. Sie besitzen dort umlaufende Dichtnuten 19 für die Ränder des rohrförmigen Trägers 8.

Die beiden Stützscheiben 4 und 5 werden zusammengehalten und gegeneinander verspannt durch einen Zuganker, der bei der dargestellten Ausführung als Gaszuführungsrohr ausgebildet ist und dazu auf einer Seite außerhalb der Stützscheibe 4 einen außermittigen Gaseinlaß 17 sowie zwischen den beiden Stützscheiben 4, 5 Gasaustrittsöffnungen 18 aufweist. Im Bereich der anderen Stützscheibe 5 ist der Zuganker 16 geschlossen.

Der rohrförmige Träger 8 besteht bei der dargestellten Ausführung aus zwei Lochblechlagen 22, 23 und einer dazwischen angeordneten Drahtgewebelage 24. Die beiden Lochblechlagen 22, 23 sind aus einem durchgehenden Lochblechstreifen gewickelt, wobei die Drahtgewebelage 24 eingewickelt ist. Die Enden des durchgehenden Lochblechstreifens sind mit der jeweils nächsten Lochblechlage 22 bzw. 23 verschweißt. Die Lochblechlagen 22, 23 weisen Löcher 25 mit einem Durchmesser von ca. 1 mm auf. Die Drahtgewebelage 24 besitzt eine Maschenweite von ca. 20 µm. Durch den Wickelvorgang ist die Drahtgewebelage 24 fest zwischen die beiden Lochblechlagen 22, 23 eingespannt.

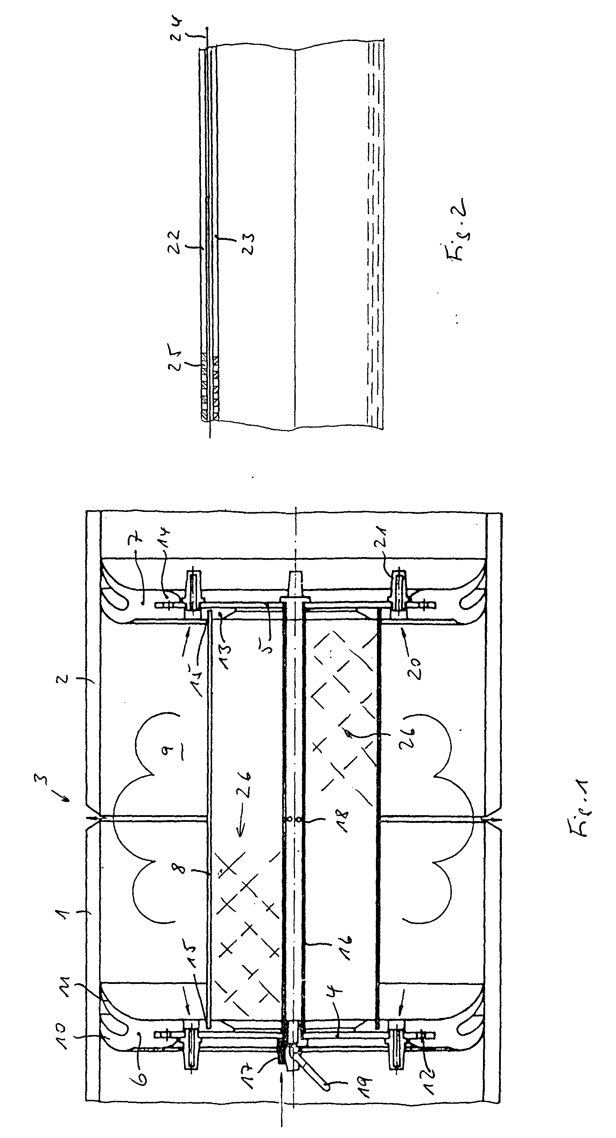

In Figur 1 ist noch dargestellt, daß der rohrförmige Träger 8 mit einem hitzebeständigen Fasermaterial 26 aus Metall, Keramik, Glas oder dergleichen gefüllt sein kann.

Um die Vorrichtung in den Bereich des Schweißspaltes 3 zu bringen, wird ein nicht dargestelltes Zugmittel an eine Zuglasche 19, zum Beispiel einen Karabinerhaken, des Zugankers 16 angeschlossen. An den Gaseinlaß 17 wird ein Schutzgasschlauch angeschlossen. Mit Hilfe des Zugmittels wird die Vorrichtung durch eines der Rohre in die dargestellte Position unter der Schweißnaht 3 gezogen. Vor Beginn des Schweißvorganges wird über den Gaseinlaß 17 ein Schutzgas zugeführt, welches durch die Gasaustrittsöffnungen 18 des Zugankers 16 in den rohrförmigen Träger 8 strömt und von dort mit laminarer Strömung in den Beflutungsraum 9 eintritt. Die Schutzgaszufuhr wird während des Schweißvorganges aufrecht erhalten. Auch nach dem Schließen der Schweißnaht 3 ist eine Spülung des Beflutungsraumes 9 mit Schutzgas möglich, weil die Stützscheiben 4 und 5 außerhalb des rohrförmigen Trägers 8 Gasauslässe 20 mit vorgesetzter Drossel 21 aufweisen, durch die das Schutzgas abfließen kann. Bei der dargestellten Ausführung besteht die Drossel 21 aus Sintermetall.

## Patentansprüche

1. Vorrichtung zur Gasbeflutung von zwei miteinander zu verschweißenden Rohren (1, 2), - mit scheibenförmigen Dichtungen (4+6, 5+7), die miteinander über einen rohrförmigen Träger (8) aus Lochblech verbunden sind, in den eine Gaszuführung (17, 18) mündet, **dadurch gekennzeichnet , daß** der rohrförmige Träger (8) aus zwei Lochblechlagen (22, 23) und wenigstens einer dazwischen angeordneten Drahtgewebelage (24) besteht.

2. Vorrichtung nach Anspruch 1, **dadurch gekennzeichnet**, daß die Lochblechlagen (22,23) Löcher (25) mit einem Druchmesser von 0,1 bis 2 mm aufweisen.

3. Vorrichtung nach Anspruch 2, **dadurch gekennzeichnet**, daß die Lochblechlagen (22, 23) Löcher (25) mit einem Durchmesser von ca. 1 mm aufweisen.

4. Vorrichtung nach einem der Ansprüche 1 bis 3, **dadurch gekennzeichnet**, daß die Drahtgewebelage (24) eine Maschenweite zwischen 20 und 150 µm aufweist.

5. Vorrichtung nach Anspruch 4, **dadurch gekennzeichnet , daß** die Drahtgewebelage (24) eine Maschenweite von ca. 50 µm aufweist.

6. Vorrichtung nach einem der Ansprüche 1 bis 5, **dadurch gekennzeichnet**, daß die beiden Lochblechlagen (22, 23) aus einem Lochblechstreifen gewickelt sind.

7. Vorrichtung nach einem der Ansprüche 1 bis 4, **dadurch gekennzeichnet**, daß die Enden des Lochblechstreifens mit der jeweils nächsten Lochblechlage (22, 23) des Wickels verschweißt sind.

8. Vorrichtung nach einem der Ansprüche 1 bis 7, **dadurch gekennzeichnet**, daß der rohrförmige Träger (8) mit einem hitzebeständigen Fasermaterial (26) aus Metall, Keramik, Glas oder dergleichen gefüllt ist.

## Claims

1. Device for gas flooding of two pipes (1, 2) to be welded together, comprising discshaped seals (4 and 6, 5 and 7) which are connected together by way of a tubular support (8) of perforated sheet metal and into which a gas feed (17, 18) opens, **characterised in that** the tubular support (8) consists of two perforated sheet metal layers (22, 23) and at least one wire gauze layer arranged therebetween.

2. Device according to claim 1, **characterised in that** the sheet metal layers (22, 23) have apertures (25) with a diameter of 0.1 to 2 mm.

3. Device according to claim 2, **characterised in that** the sheet metal layers (22, 23) have apertures (25) with a diameter of about 1 mm.

4. Device according to one of claims 1 to 3, **characterised in that** the wire gauze layer (24) has a mesh width of between 20 and 150 microns.

5. Device according to claim 4, **characterised in that** the wire gauze layer (24) has a mesh width of about 50 microns.

6. Device according to one of claims 1 to 5, **characterised in that** the two perforated sheet metal layers (22, 23) are wound from a perforated sheet metal strip.

7. Device according to one of claims 1 to 4, **characterised in that** the ends of the perforated sheet metal strip are welded to the respectively adjacent perforated sheet metal layer (22, 23) of the winding.

8. Device according to one of claims 1 to 7, **characterised in that** the tubular support (8) is filled with a heat-resistant fibre material (26) of metal, ceramic, glass or the like.

## Revendications

1. Dispositif pour remplir de gaz deux tuyaux (1, 2) à souder bout à bout, comportant deux garnitures d'étanchéité en forme de disque (4+6, 5+7) qui sont reliées entre elles par le biais d'un support tubulaire (8) fabriqué à partir de tôle perforée dans lequel débouche une arrivée de gaz (17, 18), **caractérisé en ce que** le support tubulaire (8) est composé de deux couches de tôle perforée (22, 23) et d'au moins une couche de treillis métallique (24) intercalée entre les deux précédentes.

2. Dispositif selon la revendication 1, **caractérisé en ce que** les couches de tôle perforée (22, 23) comportent des perforations (25) ayant un diamètre compris entre 0,1 et 2 mm.

3. Dispositif selon la revendication 2, **caractérisé en ce que** les couches de tôle perforée (22, 23) comportent des perforations (25) ayant un diamètre d'environ 1 mm.

4. Dispositif selon l'une des revendications 1 à 3, **caractérisé en ce que** la couche de treillis métallique (24) présente une largeur de maille comprise entre 20 et 150 µm.

5. Dispositif selon la revendication 4, **caractérisé en ce que** la couche de treillis métallique (24) présente une largeur de maille d'environ 50 µm.

6. Dispositif selon l'une des revendications 1 à 5, **caractérisé en ce que** les deux couches de tôle perforée (22, 23) sont enroulées à partir d'une bande de tôle perforée.

7. Dispositif selon l'une des revendications 1 à 4, **caractérisé en ce que** les extrémités de la bande de tôle perforée sont chaque fois soudées à la couche de tôle perforée suivante (22, 23) de l'enroulement.

8. Dispositif selon l'une des revendications 1 à 7, **caractérisé en ce que** le support tubulaire (8) est rempli d'une matériau fibreux résistant à la chaleur (26) composé de métal, de céramique, de verre ou analogue.
